# FASCICULE DE BREVET EUROPEEN

(11) **EP 1 966 976 B1**
(45) Date de publication et mention de la délivrance du brevet: **18.12.2019**
(21) Numéro de dépôt: 06847135.8
(22) Date de dépôt: 22.12.2006
(51) Int. Cl.: H04L 29/08

(54) **PROCÉDÉ D'INTERFONCTIONNEMENT DE SERVICES DE TÉLÉPHONIE SUR IP**
INTEROPERABILITÄTSVERFAHREN FÜR IP-TELEPHONIE-DIENSTE
IP TELEPHONY SERVICE INTEROPERABILITY METHOD

(30) Priorité: 27.12.2005 FR 0513373
(43) Date de publication de la demande: 10.09.2008
(73) Titulaire: Transpacific IP Group Limited, Grand Cayman KY1-1001 (KY)
(72) Inventeur: BABAGBETO, Patrick, F-22560 Trebeurden (FR); BAILLY, Marc, F-22300 Lannion (FR); JESTIN, Jean-François, F-22300 Lannion (FR)
(74) Mandataire: Eidelsberg, Olivier Nathan
(86) Numéro de dépôt international: PCT/FR2006/002865
(87) Numéro de publication internationale: WO 2007/074236

(56) Documents cités:
- EP-A2- 1 235 397
- EP-A2- 1 505 774
- WO-A-01/56233
- WO-A1-03/096210
- US-A1- 2002 021 465
- US-A1- 2003 115 335
- US-A1- 2003 182 451
- US-A1- 2005 122 963
- US-B1- 6 282 192
- PAVLIN DOBREV ET AL: "Device and Service Discovery in Home Networks with OSGi" IEEE COMMUNICATIONS MAGAZINE, IEEE SERVICE CENTER, PISCATAWAY, US, vol. 40, no. 8, août 2002 (2002-08), pages 86-92, XP011092902 ISSN: 0163-6804
- SAX W ET AL: "Experience with Prefix Discovery Servers and IPSec VPN Gateways", MILITARY COMMUNICATIONS CONFERENCE, 2005. MILCOM 2005. IEEE ATLANTIC CITY, NJ, USA 17-20 OCT. 2005, PISCATAWAY, NJ, USA,IEEE, PISCATAWAY, NJ, USA, 17 October 2005 (2005-10-17), pages 1-6, XP010901608, DOI: 10.1109/MILCOM.2005.1605768 ISBN: 978-0-7803-9393-6

## Description

La présente invention se rapporte aux services de téléphonie sur IP (de l'anglais « Internet Protocol »).

La présente invention trouve donc des applications dans le domaine de la voix sur IP, mais également dans d'autres domaines, comme la vidéoconférence sur Internet.

La téléphonie sur IP, parfois appelée téléphonie sur Internet, et souvent abrégée en « VoIP » (abrégé de l'anglais « Voice over IP »), est une technique qui permet de communiquer à distance via le réseau Internet, ou tout autre réseau acceptant le protocole TCP/IP. Contrairement à la téléphonie RTC (Réseau Téléphonique Commuté) dépendant de centraux téléphoniques dédiés, la téléphonie sur IP permet le -transport de conversations téléphoniques sur tout réseau numérique ou analogique acceptant le protocole TCP/IP, par exemple Ethernet, RNIS (Réseau Numérique à Intégration de Services), PPP (protocole Point à Point), etc.

Un utilisateur d'un service de téléphonie sur IP donné dispose d'un équipement client, par exemple un équipement domestique, configuré pour ce service de téléphonie sur IP. L'équipement client comprend typiquement un terminal pour assurer une interface utilisateur. L'équipement client comprend également une passerelle résidentielle (« Home Gateway » en anglais) pour assurer l'interface avec le réseau IP selon le service de téléphonie sur IP donné.

Par « passerelle résidentielle », on entend désigner une passerelle client, c'est-à-dire une passerelle située coté utilisateur, contrairement à un équipement réseau situé dans le réseau sous le contrôle d'un opérateur. Il peut par exemple s'agir d'une passerelle à usage domestique au sein d'une habitation, ou bien encore d'une passerelle à usage professionnel au sein d'une entreprise. D'une manière générale, il s'agit d'une passerelle à usage client.

L'utilisateur d'un service de téléphonie sur IP peut converser avec n'importe quel autre utilisateur du même service de téléphonie sur IP, c'est-à-dire avec n'importe quel autre utilisateur disposant d'un équipement client configuré pour ce service de téléphonie sur IP.

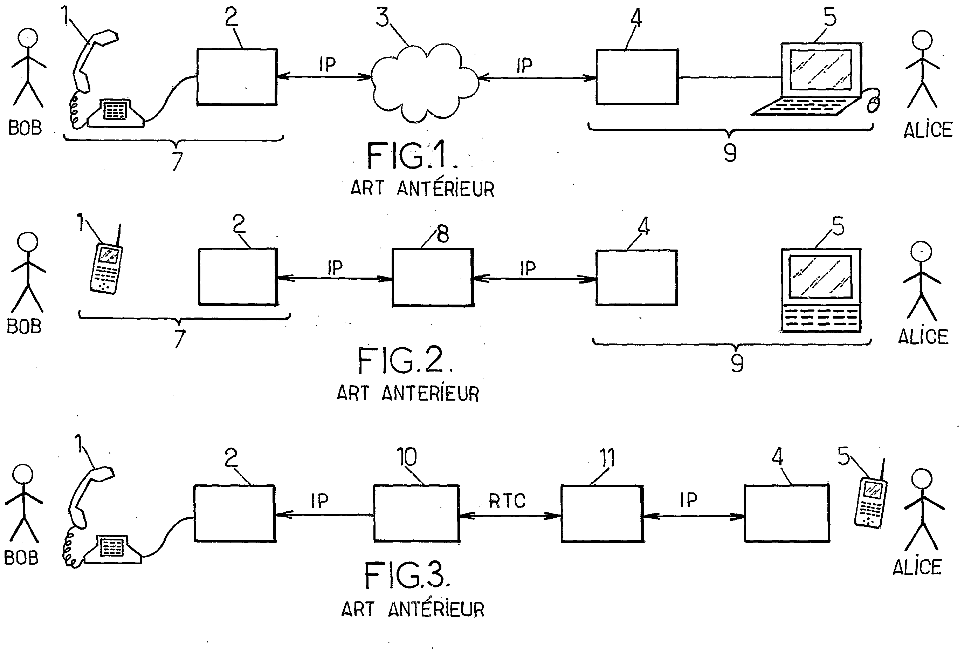

La figure 1 montre un exemple de communication entre utilisateurs d'un même service de téléphonie sur IP.

Deux utilisateurs Bob et Alice de ce service de téléphonie sur IP disposent respectivement d'équipements clients 7, 9 comprenant chacun un terminal 1, 5 relié à une passerelle résidentielle 2, 4. Les passerelles 2, 4, permettent d'assurer une interface entre les terminaux 1, 5 et Internet 3.

Les terminaux 1, 5 peuvent être de type variés, par exemple un téléphone fixe classique, un téléphone mobile, un assistant numérique personnel, un ordinateur muni d'une application de téléphonie sur IP etc.

Il existe toutefois divers services de téléphonie sur IP, éventuellement proposés par des opérateurs différents.

Un utilisateur d'un premier service de téléphonie sur IP, dit appelant, peut souhaiter converser avec un utilisateur d'un second service de téléphonie sur IP distinct du premier service, dit appelé.

L'appelant peut alors par exemple configurer son équipement client afin de devenir lui-même utilisateur du deuxième service de téléphonie sur IP.

Selon une autre possibilité, la communication entre les deux utilisateurs Bob et Alice peut s'effectuer via une passerelle d'interconnexion centralisée 8 mise en place entre les réseaux des deux fournisseurs de service de téléphonie sur IP, comme le montre la figure 2.

Dans cet exemple, les données échangées entre Bob et Alice transitent par la passerelle d'interconnexion centralisée 8, qui permet de convertir les données émises par Bob selon l'un des deux services de téléphonie sur IP en données selon l'autre service de téléphonie sur IP, et réciproquement.

La passerelle d'interconnexion centralisée 8 est gérée par les opérateurs des deux services de téléphonie sur IP, et peut couvrir une zone géographique relativement étendue, comprenant par exemple tout un pays.

Selon une troisième possibilité et dans la mesure où l'appelé dispose d'un numéro E164 (communément appelé « numéro de téléphone»), des données peuvent être échangées moyennant deux transits, comme le montre la figure 3.

Les données échangées transitent via deux passerelles d'interconnexion centralisée 10, 11.

Les données émises par l'appelant Bob circulent sur le réseau IP jusqu'à la passerelle 10. Elles sont alors converties en données selon un format adapté au RTC pour parvenir jusqu'à la passerelle 11. Les données subissent alors une seconde conversion afin de circuler sur le réseau IP jusqu'à l'appelé Alice. Réciproquement, les données émises par Alice sont d'abord converties par la passerelle 11, puis par la passerelle 10.

Les passerelles 10, 11 sont gérées de façon centralisée, et peuvent couvrir une zone géographique relativement étendue, comprenant par exemple plusieurs pays.

De plus, la possibilité de communication représentée sur la figure 3 n'est envisageable que dans la mesure où Alice dispose d'un numéro E164.

Le document SAX W et AL : « Experience with Prefix Discovery Servers and IPSec VPN Gateways », MILITARY COMMUNICATIONS CONFERENCE, 17-20 OCT 2005, décrit un réseau comprenant une passerelle VPN ainsi qu'un serveur PDS.

Un but de la présente invention est de rendre les communications entre deux utilisateurs de services de téléphonie sur IP distincts plus souples et plus faciles à gérer.

En outre, dans l'art antérieur, les données échangées sont susceptibles de transiter sur le réseau téléphonique commuté (RTC). Les passerelles résidentielles selon le premier aspect de l'invention permettent d'éviter un tel transit sur un réseau payant. Les communications peuvent ainsi rester bon marché même entre utilisateurs de deux services de téléphonie sur IP distincts.

De plus, la communication entre utilisateurs de services différents peut être possible même lorsque l'appelé ne dispose pas d'un numéro E164.

Avantageusement, une adresse réseau est attribuée au dispositif de passerelle résidentielle.

Ainsi, il est possible de rechercher dans un réseau quelle passerelle résidentielle est susceptible d'assurer l'interfonctionnement entre les deux services de téléphonie sur IP. Seul un nombre relativement faible de passerelles résidentielles selon le premier aspect de l'invention peuvent ainsi être installées dans le réseau. La mise en place de dispositifs supports de communication entre utilisateurs de deux services de téléphonie sur IP distincts est ainsi relativement simple.

Au document WO 03/096210 A1, il est décrit un procédé de transmission de données utilisant trois dispositifs de passerelle le long du chemin de transmission.

La publication US2003/0182451-A1 décrit un procédé de conversion de données entre deux services de téléphonie sur IP distincts.

Selon un aspect, la présente invention a pour objet un procédé d'interfonctionnement destiné à être mis en œuvre par un premier dispositif de passerelle résidentielle d'un équipement client, tel que défini à la revendication 1, des perfectionnements étant définis aux sous-revendications.

Ce procédé permet de réaliser un interfonctionnement entre services de téléphonie sur IP de façon décentralisée.

Avantageusement, ce procédé comprend en outre les étapes préalables consistant à :
- recevoir une requête d'au moins une adresse de dispositif de passerelle apte à convertir des données pour assurer un interfonctionnement entre les premier et second services de téléphonie sur IP, et
- envoyer une réponse, ladite réponse comprenant une adresse du premier dispositif de passerelle résidentielle.

Ainsi, il est possible de rechercher dans un réseau quel dispositif comprend des moyens de conversion pour assurer l'interfonctionnement entre les deux services de téléphonie sur IP.

Alternativement, aucune recherche dans le réseau n'est effectuée. Le dispositif de passerelle résidentielle mettant en oeuvre les étapes du procédé selon le deuxième aspect de l'invention peut être associé à un utilisateur donné.

Avantageusement, la requête est reçue du deuxième dispositif de passerelle résidentielle. Celui-ci effectue ainsi lui-même la recherche de passerelles résidentielles susceptibles d'assurer l'interfonctionnement.

Alternativement, la requête peut être reçue d'un dispositif serveur. Le deuxième dispositif de passerelle résidentielle envoie par exemple au serveur une adresse de l'appelé. Le serveur recherche dans le réseau quelle passerelle résidentielle est susceptible d'assurer l'Interconnexion et renvoie un ou plusieurs résultats au deuxième dispositif de passerelle résidentielle.

Le dispositif serveur peut couvrir une région plus ou moins étendue. Il effectue seulement une recherche d'adresses de passerelles résidentielles susceptibles de réaliser l'interfonctionnement. Le serveur peut donc être moins puissant que les passerelles d'interconnexion centralisées de l'art antérieur et est donc plus facile à mettre en place et à maintenir.

Alternativement, le serveur peut transmettre à la passerelle résidentielle de l'appelant toutes les adresses du groupe de réponses. Le choix de l'adresse vers laquelle les données à échanger seront émises est alors effectué par la passerelle résidentielle de l'appelant, ou bien par un dispositif tiers.

La requête peut par exemple être envoyée à une pluralité de dispositifs de passerelle résidentielle, auquel cas le groupe de réponses provient desdits dispositifs de passerelle résidentielle.

La requête peut alternativement être envoyée à un serveur d'indexation, mémorisant des paramètres d'interfonctionnement. Le serveur d'indexation est apte à renseigner quant aux dispositifs de passerelle résidentielle susceptibles d'assurer l'interfonctionnement.

Par « dispositif de passerelle résidentielle », on entend aussi bien une passerelle résidentielle (ou passerelle client) que tout dispositif client, voire même un dispositif relié à un nombre relativement faible d'équipements clients. La présente invention se distingue de l'art antérieur au moins en ce que l'interfonctionnement entre deux services de téléphonie sur IP est réalisé de façon décentralisée.

Par « conversion de données», on entend aussi bien un traitement des données, par exemple un transcodage ou bien une adaptation d'un protocole à l'autre, qu'une simple retransmission des données avec adaptation de la signalisation ou des en-têtes de messages. La présente invention n'est donc pas limitée par la forme de la conversion, pourvu qu'elle permette le passage des données de l'un des deux services vers l'autre service, et inversement si besoin est.

D'autres particularités et avantages de la présente invention apparaîtront dans la description ci-après.
La figure 1, déjà commentée, montre un exemple de communication entre utilisateurs d'un même service de téléphonie sur IP, connu de l'art antérieur.
La figure 2, déjà commentée, montre un exemple de communication entre utilisateurs de deux services de téléphonie sur IP via une passerelle d'interconnexion centralisée, connu de l'art antérieur.
La figure 3, déjà commentée, montre un exemple de communication entre utilisateurs de deux services de téléphonie sur IP via deux passerelles d'interconnexion centralisées, connu de l'art antérieur.
La figure 4 montre schématiquement un exemple de communication via un premier équipement client entre un deuxième équipement client et un troisième équipement client, selon un mode de réalisation de l'invention.
La figure 5 montre schématiquement un exemple d'équipement client selon un mode de réalisation de l'invention.
La figure 6 montre schématiquement un exemple de réseau comprenant un équipement client selon un mode de réalisation de l'invention.
La figure 7 montre schématiquement un exemple de dispositif de routage selon un mode de réalisation de l'invention.
La figure 8 montre un exemple de dispositif de routage selon un autre mode de réalisation de l'invention.
La figure 9 montre un exemple de dispositif de routage selon encore un autre mode de réalisation de l'invention.

Des références identiques sont utilisées pour des objets semblables ou similaires.

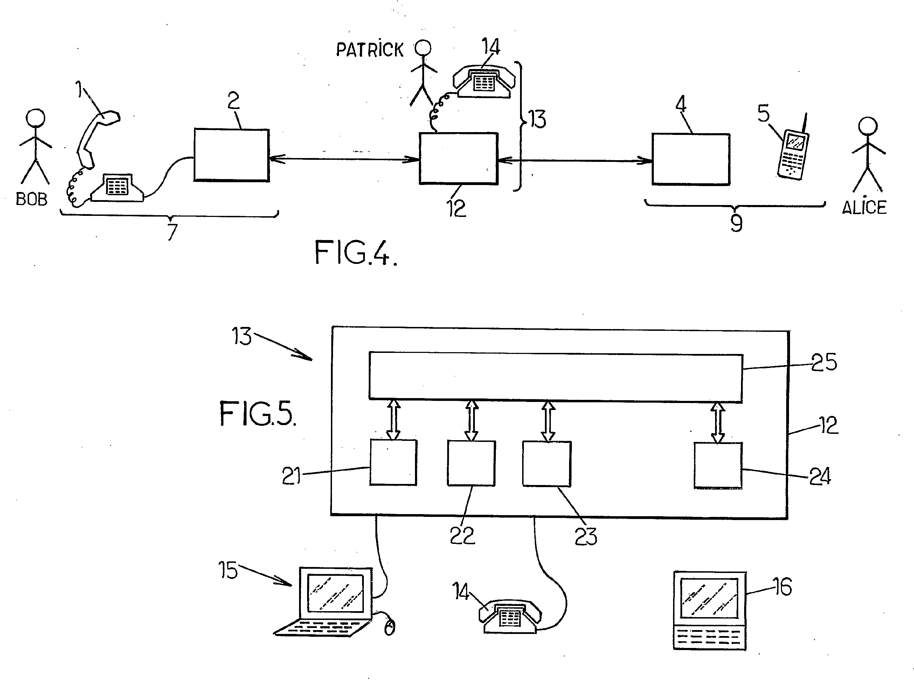

La figure 4 montre schématiquement un exemple de communication selon un mode de réalisation de l'invention.

Un premier utilisateur Bob d'un premier service de téléphonie sur IP, dit appelant, souhaite converser avec un deuxième utilisateur Alice d'un second service de téléphonie sur IP distinct du premier service de téléphonie sur IP, dit appelé. Bob et Alice disposent respectivement d'équipements clients, ici des équipements domestiques 7, 9, comprenant chacun un terminal 1, 5 et un dispositif de passerelle résidentielle 2, 4.

La communication s'effectue via un premier dispositif de passerelle résidentielle 12 d'un premier équipement client 13. L'équipement client 13 appartient à un tiers utilisateur Patrick. L'équipement client 13 comprend un terminal 14 et la passerelle 12.

La passerelle 12 comprend des moyens de conversion de données (non représentés sur la figure 4) pour assurer un interfonctionnement entre les deux services de téléphonie sur IP, dont le fonctionnement est décrit ci-après.

En fonctionnement la passerelle 12 reçoit de la passerelle 2 de l'appelant Bob, dite également deuxième dispositif de passerelle résidentielle 2, des données émises selon le premier service de téléphonie sur IP. A l'aide des moyens de conversion, la passerelle 12 convertit ces données en données selon le second service de téléphonie sur IP, puis les transmet à la passerelle 4 de l'appelé Alice, dite également troisième dispositif de passerelle résidentielle 4.

De la même façon, la passerelle résidentielle 12 de Patrick peut recevoir de la passerelle 4 d'Alice des données selon le second service de téléphonie sur IP. Ces données sont converties en données selon le premier service de téléphonie sur IP et transmises à la passerelle 2 de Bob.

L'interfonctionnement entre les premier et second services de téléphonie sur IP est ainsi réalisé par la passerelle 12 de Patrick.

La figure 5 montre schématiquement un exemple d'équipement client du tiers Patrick selon un mode de réalisation de l'invention.

L'équipement client 13 comprend une passerelle résidentielle 12 et des terminaux 14, 15, 16. Les terminaux peuvent par exemple comprendre un téléphone fixe 14, un ordinateur 15 et un assistant personnel (PDA) 16. Sur l'ordinateur 15 peuvent être installés par exemple deux comptes services correspondant à des premier et deuxième services de téléphonie sur IP distincts. Le téléphone fixe 14 permet d'assurer une interface utilisateur pour un troisième service de téléphonie sur IP et l'assistant personnel 16 permet d'assurer une interface utilisateur pour un quatrième service de téléphonie sur IP.

La passerelle résidentielle 12 comprend des moyens de conversion comprenant une interface de programmation (ou API de l'anglais «Application Programming Interface ») 21, 22, 23, 24 pour chaque service de téléphonie sur IP et une couche logicielle d'interfonctionnement 25. Les interfaces de programmation 21, 22, 23, 24 comprennent des piles logicielles des services de téléphonie sur IP pour lesquels la passerelle résidentielle 12 héberge une fonction d'interfonctionnement.

L'interfonctionnement peut être réalisé par la couche logicielle d'interfonctionnement 25.

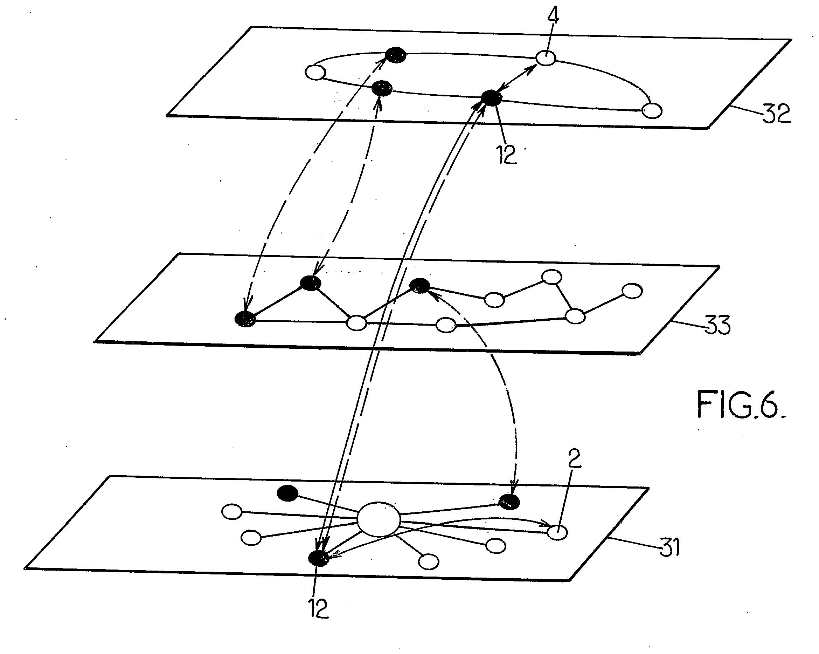

La figure 6 montre schématiquement un exemple de réseau comprenant un équipement client selon un mode de réalisation de l'invention.

Ce réseau est représenté en couches, chaque couche correspondant à un service. Les points sur une première couche 31 représentent les passerelles résidentielles d'utilisateurs ayant souscrit au premier service de téléphonie sur IP. Les points sur une deuxième couche 32 représentent les passerelles résidentielles d'utilisateurs ayant souscrit au deuxième service de téléphonie sur IP. Enfin, les points sur une troisième couche 33 représentent les passerelles résidentielles d'utilisateurs ayant souscrit à un troisième service de téléphonie sur IP.

Les points restés blancs représentent des passerelles résidentielles d'utilisateurs ayant souscrit à un seul service de téléphonie sur IP.

En revanche, les points noirs représentent des passerelles résidentielles d'utilisateurs ayant souscrit à plusieurs services de téléphonie sur IP. Ces passerelles résidentielles peuvent être agencées pour assurer un interfonctionnement entre services de téléphonie sur IP.

Par exemple, la passerelle 12 appartient à la fois à la première couche 31 et à la troisième couche 32. Cette passerelle 12 peut être agencée de façon à assurer l'interfonctionnement entre les services correspondants, à savoir le premier service et le deuxième service. Les flèches en pointillés indiquent un changement de réseau.

Chaque service de téléphonie sur IP possède sa propre organisation d'architecture logique. Le premier service présente par exemple une architecture centralisée, le deuxième service utilise une table de hachage répartie (ou DHT, de l'anglais « Distributed Hash Table ») et le troisième service une architecture poste à poste (ou P2P, de l'anglais « Peer to Peer »).

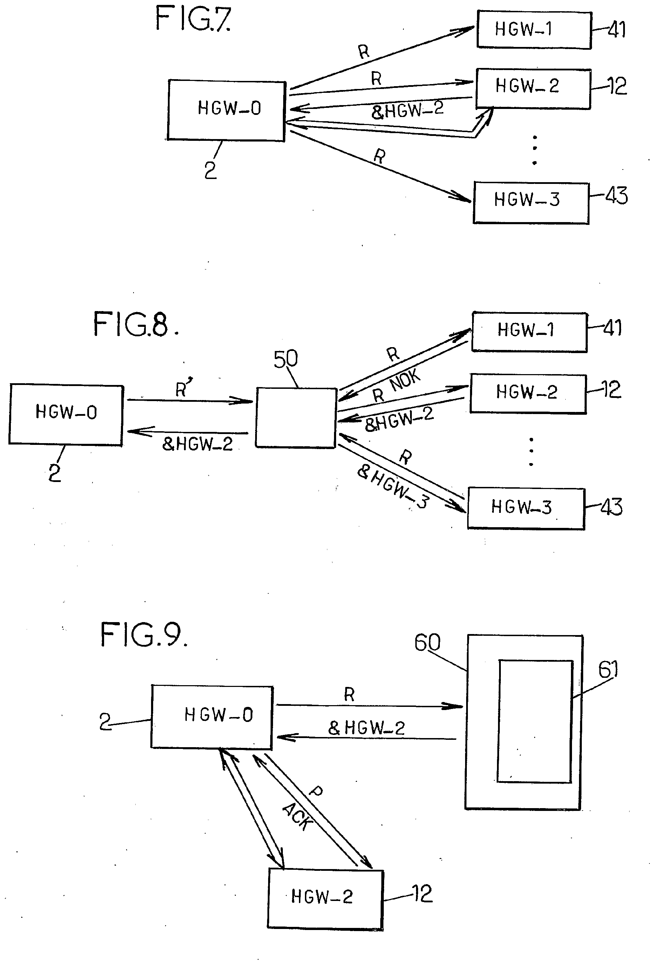

Lorsqu'un utilisateur du premier service de téléphonie sur IP, disposant de la passerelle résidentielle 2, souhaite communiquer avec un utilisateur du deuxième service de téléphonie sur IP, une ou plusieurs passerelles résidentielles intermédiaires proposant l'interfonctionnement entre plusieurs services peuvent être sollicitées. En particulier, la passerelle 2 peut rechercher les passerelles résidentielles appartenant à la fois à la première couche 31 et à la deuxième couche 32. Des exemples de différents modes de réalisation d'une telle recherche, dite également routage, sont représentés sur les figures 7, 8 et 9.

Une fois le routage effectué, la passerelle 2 adresse à une passerelle résidentielle choisie, par exemple la passerelle 12, des données selon le premier service. La passerelle 12 convertit ces données en données selon le deuxième service et les transmet à la passerelle 4 de l'appelé. Réciproquement, la passerelle 12 convertit des données reçues de la passerelle 4 de l'appelé en données selon le premier service, et les transmet à la passerelle résidentielle 2 de l'appelant. Les flèches pleines représentent le trajet suivi par les données échangées.

La figure 7 montre schématiquement un exemple de dispositif de routage selon un mode de réalisation de l'invention.

Dans ce mode de réalisation, le dispositif de routage 2 comprend seulement une passerelle résidentielle 2 d'un utilisateur (non représenté sur la figure 7) d'un premier service de téléphonie sur IP.

Lorsque cet utilisateur, dit appelant, souhaite converser avec un utilisateur d'un autre service de téléphonie sur IP, dit appelé, la passerelle 2 envoie à une pluralité de passerelles résidentielles 41, 12, 43 une requête R d'au moins une adresse de passerelle résidentielle apte à assurer un interfonctionnement entre les deux services de téléphonie sur IP. La pluralité de passerelles résidentielles 41, 12, 43 comprend par exemple un nombre prédéfini de passerelles résidentielles utilisant le premier service de téléphonie sur IP.

Dans cet exemple, les passerelles résidentielles 41, 43 incapables d'assurer l'interfonctionnement s'abstiennent de répondre. La passerelle 12 répond en envoyant à la passerelle 2 son adresse &HGW_2.

La passerelle 2 choisit éventuellement une des passerelles résidentielles parmi celles ayant envoyé leur adresse, à partir de critères propres, par exemple l'éloignement ou l'encombrement du réseau.

La passerelle 2 émet ensuite des données selon le premier service de téléphonie sur IP vers la passerelle choisie, ici la passerelle résidentielle 12. Ces données comprennent des données d'ouverture d'une session de téléphonie sur IP, ainsi que des données d'informations proprement dites. La passerelle 2 reçoit également des données de la passerelle 12. Les données échangées sont représentées par une double flèche.

La figure 8 montre schématiquement un exemple de dispositif de routage selon un autre mode de réalisation de l'invention.

Dans cet autre mode de réalisation, la requête R est envoyée à la pluralité de passerelles résidentielles 41, 12, 43 par un dispositif serveur 50 en communication avec la passerelle résidentielle 2.

Le dispositif serveur 50 agit sur requête R' de la passerelle 2.

Le dispositif serveur 50 peut éventuellement recevoir un jeu de réponses comprenant plusieurs réponses, par exemple une réponse négative NOK et deux adresses &HGW_2, &HGW_3. Le dispositif serveur 50 choisit une adresse parmi les adresses reçues et l'envoie à la passerelle résidentielle 2. C'est à la passerelle résidentielle 12 correspondant à cette adresse que la passerelle résidentielle 2 envoie par la suite des données selon le premier service de téléphonie sur IP (non représentées).

La figure 9 montre schématiquement un exemple de dispositif de routage selon un mode de réalisation de l'invention.

Dans ce mode de réalisation, un serveur d'indexation 60 mémorise, dans une mémoire 61, des paramètres concernant l'aptitude d'une pluralité de passerelles résidentielles (non représentées) à l'interfonctionnement, entre un premier et un second services de téléphonie sur IP.

Dans ce mode de réalisation, un certain nombre de passerelles résidentielles sont susceptibles de s'adresser au serveur d'indexation 60. Dans un mode de réalisation alternatif et non représenté, à chaque passerelle est associée un serveur d'indexation mémorisant des paramètres concernant l'aptitude à l'interfonctionnement d'une pluralité de passerelles résidentielles. La passerelle résidentielle et le serveur d'indexation associé peuvent même être disposés dans un même boîtier.

Pour revenir à la figure 9, il suffit à la passerelle 2 d'interroger le serveur d'indexation 60 pour que celui-ci retourne l'adresse &HGW_2 d'une passerelle résidentielle 12 capable d'assurer l'interfonctionnement. La passerelle 2 émet alors des données selon le premier service de téléphonie sur IP vers la passerelle 12 correspondant à cette adresse et reçoit de cette passerelle 12 d'autres données selon le premier service, comme représenté par la double flèche.

L'émission et la réception des données selon le premier service peuvent être précédés d'un échange entre la passerelle résidentielle 2 et la passerelle résidentielle 12. Lors de cet échange, la passerelle 2 demande à la passerelle 12 de la mettre en contact avec l'appelé. Par exemple, la passerelle 2 envoie un message P comprenant l'adresse de l'appelé, un identifiant du service de l'appelé, par exemple le second service de téléphonie sur IP, et une requête d'interfonctionnement. L'adresse de l'appelé peut par exemple comprendre un pseudonyme. La présente invention n'est bien entendu pas limitée par une telle mise en œuvre de l'échange. Le message P peut par exemple comprendre seulement une adresse universelle de l'appelé et une requête d'interfonctionnement.

Si la passerelle 12 répond favorablement, la passerelle 2 émet alors des données selon le premier service de téléphonie sur IP. La passerelle 12 utilise alors des APIs correspondant aux deux services concernés pour réaliser l'interfonctionnement. La passerelle résidentielle 12 joue donc un rôle d'intermédiaire entre l'utilisateur d'un service et l'utilisateur de l'autre service. Ce rôle peut se limiter à de la signalisation, c'est-à-dire que la passerelle 12 se contente de transmettre les données, ou bien comprendre également un traitement des données échangées, c'est-à-dire que les données selon le premier service sont traitées afin de satisfaire aux exigences du second service et réciproquement. Le traitement peut par exemple comprendre un changement de protocole, ou bien encore un transcodage.

Les modes de réalisation des figures 7, 8, 9 représentent seulement des possibilités non limitatives de mise en œuvre du routage.

En particulier, les données échangées peuvent transiter par plusieurs intermédiaires.

## Revendications

1. Procédé d'interfonctionnement mis en œuvre par un premier dispositif de passerelle résidentielle (12) d'un équipement client décentralisé (13), comprenant les étapes suivantes :
- recevoir d'un deuxième dispositif de passerelle résidentielle (2) des données émises selon un premier service de téléphonie sur IP, et recevoir d'un troisième dispositif de passerelle résidentielle (4) des données émises selon un second service de téléphonie sur IP, le second service de téléphonie sur IP étant distinct du premier service de téléphonie sur IP et les premier, deuxième et troisième dispositifs de passerelle résidentielle étant distincts,
- convertir les données reçues du deuxième dispositif de passerelle résidentielle en données selon le second service de téléphonie sur IP et convertir les données reçues du troisième dispositif de passerelle résidentielle en données selon le premier service de téléphonie sur IP,
- transmettre les données converties selon le second service de téléphonie sur IP au troisième dispositif de passerelle résidentielle, et transmettre les données converties selon le premier service de téléphonie sur IP au deuxième dispositif de passerelle résidentielle.

2. Procédé d'interfonctionnement selon la revendication 1, comprenant en outre les étapes suivantes :
- recevoir une requête (R) d'au moins une adresse de dispositif de passerelle résidentielle (12, 43) apte à convertir des données pour assurer un interfonctionnement entre les premier et second services de téléphonie sur IP,
- envoyer une réponse, ladite réponse comprenant une adresse du premier dispositif de passerelle résidentielle (&HGW_2).

3. Procédé d'interfonctionnement selon la revendication 2, dans lequel la requête (R) est reçue du deuxième dispositif de passerelle résidentielle (2).

4. Procédé d'interfonctionnement selon la revendication 2, dans lequel la requête (R) est reçue d'un dispositif serveur (50).

## Patentansprüche

1. Interoperabilitätsverfahren, das durch eine erste Residential-Gateway-Vorrichtung (12) einer dezentralen Kundenanlage (13) umgesetzt wird, umfassend die folgenden Schritte:
- Empfangen von Daten von einer zweiten Residential-Gateway-Vorrichtung (2), die gemäß einem ersten IP-Telefoniedienst versandt werden, und Empfangen von Daten von einer dritten Residential-Gateway-Vorrichtung (4), die gemäß einem zweiten IP-Telefoniedienst versandt werden, wobei der zweite IP-Telefoniedienst vom ersten IP-Telefoniedienst verschieden ist und die ersten, zweiten und dritten Residential-Gateway-Vorrichtungen verschieden sind,
- Konvertieren der von der zweiten Residential-Gateway-Vorrichtung empfangenen Daten in Daten gemäß dem zweiten IP-Telefoniedienst und Konvertieren der von der dritten Residential-Gateway-Vorrichtung empfangenen Daten in Daten gemäß dem ersten IP-Telefoniedienst ,
- Übertragen der gemäß dem zweiten IP-Telefoniedienst konvertierten Daten an die dritte Residential-Gateway-Vorrichtung und Übertragen der gemäß dem ersten IP-Telefoniedienst konvertierten Daten an die zweite Residential-Gateway-Vorrichtung.

2. Interoperabilitätsverfahren nach Anspruch 1, ferner umfassend die folgenden Schritte:
- Empfangen einer Anforderung (R) von mindestens einer Adresse der Residential-Gateway-Vorrichtung (12, 43), die in der Lage ist, Daten zu konvertieren, um eine Interoperabilität zwischen dem ersten und zweiten IP-Telefoniedienst sicherzustellen,
- Senden einer Antwort, wobei die Antwort eine Adresse der ersten Residential-Gateway-Vorrichtung (&HGW_2) umfasst.

3. Interoperabilitätsverfahren gemäß Anspruch 2, wobei die Anforderung (R) von der zweiten Residential-Gateway-Vorrichtung (2) empfangen wird.

4. Interoperabilitätsverfahren gemäß Anspruch 2, wobei die Anforderung (R) von einer Servervorrichtung (50) empfangen wird.

## Claims

1. An interoperability method used by a first home gateway device (12) of a decentralized client equipment (13), comprising:
- receiving from a second home gateway device (2) data sent in accordance with a first IP telephony service, and receiving from a third home gateway device (4) data sent in accordance with a second IP telephony service, the second IP telephony service being distinct from the first IP telephony service and first, second and third home gateway devices being distinct,
- converting the data received from the second home gateway device into data in accordance with the second IP telephony service, and converting the data received from the third home gateway device into data in accordance with the first IP telephony service,
- transmitting the data converted in accordance with the second IP telephony service to the third home gateway device, and transmitting the data converted in accordance with the first IP telephony service to the second home gateway device.

2. The interoperability method as claimed in claim 1, further comprising:
- receiving a request (R) for at least one address of a gateway device (12, 43) able to convert data in order to provide interoperability between the first and second IP telephony services, and
- sending a response, said response comprising an address of the first home gateway device (&HGW_2).

3. The interoperability method as claimed in claim 2, wherein the request (R) is received from the second home gateway device (2).

4. The interoperability method as claimed in claim 2, wherein the request (R) is received from a server device (50).
